# EUROPEAN PATENT APPLICATION

(11) **EP 4 357 198 A1**
(43) Date of publication of application: **24.04.2024**
(21) Application number: 22824352.3
(22) Date of filing: 08.06.2022
(51) Int. Cl.: B60Q 1/26, G08G 1/0962, H04W 4/02, H04B 1/3822

(54) **ROADSIDE INCIDENT WARNING DEVICE**

(30) Priority: 17.06.2021 ES 202130560
(71) Applicant: Nicolas Gil, Diego, 30500 Molina de Segura (Murcia) (ES)
(72) Inventor: Nicolas Gil, Diego, 30500 Molina de Segura (Murcia) (ES)
(74) Representative: Temiño Ceniceros, Ignacio
(86) International application number: PCT/ES2022/070355
(87) International publication number: WO 2022/263692

(57) **Abstract**

The present invention relates to a road incident warning device, which is installed in a vehicle, and comprises a processing module that is programmable and controls the operation of the device; a radio frequency remote communication module, which is in connection with the processing module; and that emits warning signals in the event of an incident in the vehicle, and/or receives warning signals from other warning devices; an activation button or push button of the device, in connection with the processing module; a connector with a battery; an alert buzzer, in connection with the processing module, and emits a vibrating warning alert to the driver; an audio output to a speaker that emits an acoustic signal to warn the driver of a dangerous situation; an output to a luminaire, which emits a light signal in the event of a dangerous situation; and a connector with an antenna.

## Description

### FIELD OF THE INVENTION

The present invention relates to a new device that is installed in a vehicle and that improves road safety by alerting and warning of any type of road incident, thereby avoiding or minimising the risk of what are known as rear-end accidents. This system is based on the fact that said device warns vehicles circulating in the vicinity of the road of any stop, whether due to a breakdown or accident, or receives the warning that there is an incident concerning another vehicle on the aforementioned road.

The field of application of the present invention falls within the different types of devices, equipment or systems related to signalling or warning of incidents on the road.

### BACKGROUND OF THE INVENTION

The general public is aware of the serious problem related to road accidents. Among the different types or causes of an accident, the most common and general are those called rear-end accidents. This type of accident is based on a vehicle hitting another that is travelling in the same direction on a road or highway. The most common causes of this type of accident are because there are two vehicles travelling in the same lane of a road, but the rear vehicle is going at a higher speed than the vehicle in front, which is generally the case with lorries; that the driver of a vehicle is absent-minded and loses control of the vehicle when faced with an obstacle on the road; or that a vehicle drives into vehicles that are stopped in front of it, as often happens in traffic jams, which can lead to pile-ups.

To try to solve this road safety problem, different types of devices and lighting means are known, which can be portable and are used as lighting elements for position and/or danger signalling. These devices allow you to send a warning or a light signal to vehicles that are in the vicinity of the location of the vehicle that carries said device. However, this type of solution has the drawback that it requires drivers of vehicles that are in the vicinity of the signalled incident be focussed, or the weather conditions to be reasonably favourable for the light signal to be visible at great distances given that, for example, if there is fog or heavy rain, visibility conditions are reduced. For these reasons, it is known that these light signals, by themselves, are not sufficient to avoid rear-end accidents on roads, mainly where there is high traffic density or they are roads where vehicles travel at high speed, and/or the weather conditions are unfavourable at the time of the incident.

Solutions based on autonomous vehicle braking systems are also known, which can detect the presence of an obstacle on the road and automatically brake the vehicle. The problem with these systems is that they are complex and expensive, and, in addition, they present operational problems when a vehicle is traveling at high speeds and/or the incident is sudden.

To solve the problems of driver confusion, systems are also known that warn of driver fatigue when a vehicle control is not activated, and have audible warnings to prevent the driver from being distracted from driving.

Finally, the incident warning displayed on navigation devices in vehicles is also known. However, these types of solutions require an update time and are designed for large incidents or accidents; therefore, they do not allow a driver to know in real time if there is a problem on said road, in addition to the fact that the driver has to pay attention to the navigator in order to be informed.

Taking these aspects into account, the present invention describes a new type of device with a structure or composition different from any type of apparatus or device known in this sector, which has the advantage of being able to be installed in any type of vehicle that circulates on a road, wherein this device alerts, by means of a light and/or acoustic signal, the driver of the vehicle that is approaching an incident, such as an obstacle, and can in turn activate the emergency signals of the vehicle itself such that the rest of the vehicles that are travelling on that same road are warned of the incident detected by the device. This makes it possible to solve all the problems previously indicated, given that this device allows a warning of an incident to be received and/or sent by radio, which does not depend on weather conditions; avoids late response problems due to driver fatigue or lack of visibility, given that the warning is made by different means and directly to the driver; and the reception and warning of the incident is automatic and instantaneous, avoiding the problems of having to update emergency situations on the road from time to time. Consequently, it is considered that the device object of the present invention not only differs from any device or system known in this sector related to road safety, but also provides a solution that allows road incidents such as, for example, rear-end accidents or any other unforeseen circumstance that occurs on the road to be avoided or minimised.

### DESCRIPTION OF THE INVENTION

The warning device that is disclosed allows a user to be warned, while travelling on a road, of any incident that may occur on said section, for which they receive an acoustic and/or light alert when they approach within a radius close to the place of the incident, and allows the driver, in the event of possible distraction or surprise, to only pay attention to the road, avoiding a possible rear-end accident. To do this, the device is installed in a vehicle that can be located by means of satellite georeference, and that comprises a button/push button in the event that the vehicle carrying it suffers an accident, voluntary stop or any other contingency, it sends a warning that is received by other similar devices installed in other vehicles, such that every vehicle travelling in a radius close to the incident is warned. This entails another advantage of the invention, which is that this device allows connectivity between vehicles.

Going into a greater detail, the device comprises:
- a processing module, which is programmable and controls the operation of the device,
- a radio frequency (RF) remote communication module, which is a transceiver or receiver and transmitter module, and which is in connection with the processing module; that emits warning signals in the event of an incident in the vehicle, and/or receives warning signals from other devices that may be within a radius of action;
- a activation button or push button of the device, in connection with the processing module, with which a driver or user can activate the device in the event of a vehicle stop situation, said button may be integrated into the device itself and/or be in connection with the emergency flashers of the vehicle; and it can also be in connection with the low beam headlights of the vehicle;
- a connector with a battery, wherein the battery can be either an auxiliary battery or the vehicle's own battery;
- an alert buzzer, in connection with the processing module, and emits a vibrating alert that warns the driver of a dangerous situation;
- an audio output to a speaker, wherein the speaker can be integrated into the device itself or can be the speaker of the vehicle, and/or be in turn connected to the buzzer;
- an output to a luminaire, wherein this luminaire can be a warning LED that flashes or emits a light signal in the event of a dangerous situation;
- a connector with an antenna, wherein the antenna can be integrated into the device itself, or be the vehicle's own antenna;
and wherein additionally, the device may comprise:
- a connector with a geopositioning or GPS module, in connection with the processing module, wherein this module can be integrated into the device itself or in connection with a GPS integrated into the vehicle itself or auxiliary GPS equipment; such that the vehicle can be geolocated via satellite, and can warn vehicles that do not have a device such as the one described in the present invention of this dangerous situation;
- a temperature sensor, in connection with the processing module, that can warn the driver of a possible problem in the operation of the vehicle;
- and a 5G type card that improves connectivity while mobile.

Among the different types of RF modules that can be used in the present device, in a possible embodiment of the invention the so-called system on chip (SoC) can be used; although in other possible embodiments of the invention modules known as point-to-point protocols (PPP), point-to-multi point networks, LPWAN or other types of known RF technologies can be used.

Secure or encrypted transmission means can also be used to emit and receive data, for which the processing module is programmed for this purpose and, for example, in a possible embodiment of the invention, AES 128 bit data encryption can be used.

The integration or installation of the device can be adapted to the type of vehicle given that it is a versatile solution that can work autonomously, or remaining or being permanently integrated into the vehicle itself. In one embodiment of the invention, the device is installed inside the dashboard, and can be connected to parts of the vehicle itself, remaining fully integrated in said vehicle, that is, it can be connected to the battery, speakers, to the antenna of the vehicle, and with emergency flashers.

The operation of a system comprising a plurality of these devices installed in vehicles is that in the event that a vehicle carrying this device has a stop on a road, and the device being programmed to broadcast within a 1 km radius, this vehicle emits a warning signal that there is an incident and that it obstructs part of a road by means of pressing the activation button of the device, whereby the device emits waves or a warning signal, and all vehicles that are in the range radius and that carry this same device will begin to emit alarm signals that warn the driver to take special care in the event of an unforeseen event in that area, they even automatically activate the emergency flashers and/or the low beams of the broken-down vehicle, and this signal does not stop until no longer in the range radius of the device installed in the vehicle that has suffered the accident, which, as mentioned, can turn on its low beam headlights. In this regard, the device object of the present invention communicates with others on the same frequency and its communication with other devices is secure and calibrated, being able to work anywhere in the world and without failures or shielding.

It must be taken into account that throughout the description and claims, the term "comprises" and its variants are not intended to exclude other technical features or additional elements.

In order to complement the description that will be made below and with the object of helping to better understand the features of the invention, in accordance with a preferred practical embodiment thereof, said description is accompanied, as an integral part thereof, by a drawing where, in an illustrative and non-limiting manner, the following has been represented:

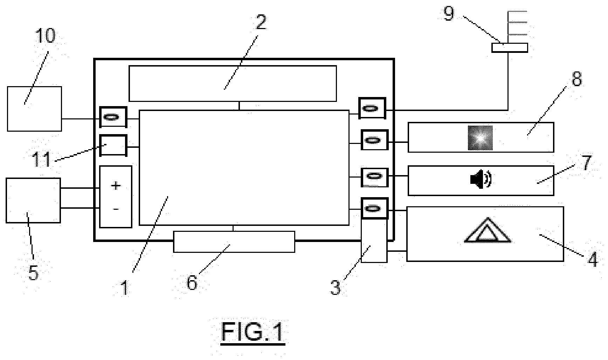

Figure 1 schematically shows the composition of a road incident warning device that is the object of the present invention.

### DETAILED DESCRIPTION OF AN EMBODIMENT OF THE INVENTION

In light of Figure 1, it can be seen that in an embodiment of the invention wherein the device is fixedly integrated into the vehicle, this device comprises:
- a processing module (1), which is programmable and controls the operation of the device,
- a radio frequency remote communication module (2), which is a transceiver or receiver and transmitter module, and which is in connection with the processing module; that emits warning signals in the event of an incident in the vehicle, and/or receives warning signals from other devices that may be within a radius of action;
- an activation button or push button (3) of the device, in connection with the processing module, with which a driver or user can activate the device in the event of a vehicle stop situation, wherein said button is in connection with the emergency flashers (4) of the vehicle, such that when the user activates the device, the emergency lights of the vehicle are activated and warns the vehicles that are close to it, and that in event the device receives an emergency signal, these emergency lights automatically activate themselves;

- a connector with a battery (5), this battery being the vehicle's own battery;
- an alert buzzer (6), in connection with the processing module, and emits a vibrating alert that warns the driver of a dangerous situation;
- an audio output to a speaker (7), wherein the speaker is the vehicle's own speaker, such that in the event a warning is received from other devices, the normal audio broadcast of the vehicle is cut off and an emergency sound warning is emitted;
- an output to a luminaire (8) which is a warning LED that flashes or emits a light signal in the event of a dangerous situation;
- a connector with an antenna (9), wherein the antenna is the vehicle's own antenna; and furthermore,
- a connector with a geopositioning or GPS module (10) integrated into the vehicle itself, which is in connection with the processing module; such that the vehicle is geolocated at all times via satellite, and can warn vehicles that do not have a device such as the one described in the present invention of this dangerous situation; and
- a temperature sensor (11), in connection with the processing module, that can warn the driver of a possible problem in the operation of the vehicle.

## Claims

1. A road incident warning device, which is installed in a vehicle, and is **characterised in that** it comprises a processing module (1) that is programmable and controls the operation of the device; a radio frequency remote communication module (2), which is in connection with the processing module; and that emits warning signals in the event of an incident in the vehicle, and/or receives warning signals from other warning devices; an activation button or push button (3) of the device, in connection with the processing module; a connector with a battery (5); an alert buzzer (6), in connection with the processing module, and emits a vibrating warning alert to the driver to a dangerous situation; an audio output to a speaker (7) that emits an acoustic signal to warn the driver of a dangerous situation; an output to a luminaire (8), which emits a light signal in the event of a dangerous situation; and a connector with an antenna (9).

2. The road incident warning device, according to claim 1, wherein the activation button (3) of the device is in connection with the emergency flashers (4) of the vehicle.

3. The road incident warning device, according to claim 1, wherein the activation button (3) of the device is in connection with the low beam headlights of the vehicle.

4. The road incident warning device, according to claim 1, wherein the luminaire (8) is of the LED type.

5. The road incident warning device, according to claim 1, **characterised in that** it comprises a connector with a geopositioning or GPS module (10).

6. The road incident warning device, according to claim 1, **characterised in that** it comprises a temperature sensor.
